# EUROPÄISCHE PATENTSCHRIFT

(11) **EP 1 661 663 B1**
(45) Veröffentlichungstag und Bekanntmachung des Hinweises auf die Patenterteilung: **28.03.2007**
(21) Anmeldenummer: 05021753.8
(22) Anmeldetag: 06.10.2005
(51) Int. Cl.: B24B 5/42, B24B 19/12, B24B 41/00

(54) **Schleifmaschine für wellenförmige Werkstücke**
Grinding machine for shafts
Machine à rectifier des arbres

(30) Priorität: 24.11.2004 DE 102004056802
(43) Veröffentlichungstag der Anmeldung: 31.05.2006
(73) Patentinhaber: NAXOS Union GmbH, 73084 Salach (DE)
(72) Erfinder: Markefka, Heino Claussen, 63322 Rödermark (DE)

(56) Entgegenhaltungen:
- EP-A- 0 990 483
- WO-A-01/10597
- WO-A-84/04480
- DE-A1- 10 030 087

## Beschreibung

Die Erfindung betrifft eine Schleifmaschine zur Bearbeitung wellenförmiger Werkstücke mit mindestens einer Werkstückaufnahme, in der das Werkstück einspannbar und antreibbar ist, und mit mindestens einem Schleifspindelstock, der mit einer Zustelleinheit radial verstellbar ist. Derartige Schleifmaschinen werden besonders vorteilhaft zur Bearbeitung von Hublagerzapfen von Kurbelwellen und Nocken von Nockenwellen eingesetzt, wobei die Schleifscheibe den umlaufenden Konturen der Werkstücke hin- und her pendelnd folgen muss.

Aus der DE 92 18 553.3 U1 ist eine Schleifmaschine zum Schleifen von Hublagerzapfen einer Kurbelwelle mit auf einem Werkzeugtisch montierten Werkstückspindelstöcken bekannt. Der Werkzeugtisch ist in Axialrichtung verfahrbar und wird während des Schleifens festgeklemmt. Die Kurbelwelle kann gegenüber dem Schleifspindelstock über eine Axialpositioniereinrichtung justiert werden. Der Schleifspindelstock ist auf einem Schlitten auf dem Maschinenbett beweglich geführt und an die Kurbelwelle radial zustellbar. Bei dieser bekannten Schleifmaschine liegen die Führungen und die Antriebe für den Werkzeugtisch und den Schleifspindelstock unterhalb des Angriffspunktes vom Werkzeug am Werkstück (Schleifstelle) und müssen gegen die beim Schleifen in der Regel verwendeten Kühlschmierstoffe, wie bspw. Öle oder Emulsionen, abgedichtet werden. Außerdem unterliegen die Führungen für den Schleifspindelstock auf Grund der Vielzahl von auszuführenden Bewegungen einem erhöhten Verschleiß.

Die WO 01/10597 A zeigt eine Schleifspindeleinheit zur Bearbeitung von Kurbel- und Nockenwellen. Die Schleifspindel ist in einem Gehäuse aufgenommen, welches an einem Schlitten schwenkbar gelagert ist. Zustellbewegungen sind sowohl durch Linearbewegungen des Schlittens als auch durch Schwenkbewegungen des Gehäuses um eine Schwenkachse möglich. Letzteres hat den Vorteil, dass während der Zustellbewegung nicht die komplette Spindeleinheit bewegt werden muss. Bei dieser Maschine sind die Linearführungen ebenfalls unterhalb des Werkzeugangriffspunktes angeordnet. Auch die in der WO 84/04480 A beschriebene Schleifmaschine ist mit einer schwenkbar am Maschinengestell gelagerten Schleifspindel ausgestattet. Das Werkstück ist um seine Rotationsachse antreibbar auf einem Schlitten gelagert. Zur Durchführung von Vorschubbewegungen ist der Schlitten auf Führungsbahnen unterhalb des Werkzeugangriffspunktes am Maschinengestell beweglich geführt.

Aufgabe der Erfindung ist es, eine Schleifmaschine zu schaffen, die unanfälliger hinsichtlich des Verschleißes und der Beschädigung der Führungsbahnen und Antriebe oder der sie schützenden Abdeckungen ist. Es ist auch Aufgabe der Erfindung, die Größe der bei der Zustellung des Spindelstocks zu bewegenden Massen zu verringern.

Gelöst wird diese Aufgabe durch eine Schleifmaschine mit den Merkmalen des Patentanspruchs 1.

Der Kerngedanke der Erfindung besteht darin, den Schleifspindelstock als pendelnde Schwinge auszuführen. Die im Stand der Technik üblichen Linearführungen für die Zustellung des Schleifspindelstocks werden dabei durch Gelenke ersetzt. Die Antriebe und Linearführungen für Bewegungen in Richtung der Werkstücklängsachse (Z-Achse) sind in einer vorteilhaften Ausführung mit deutlichem Abstand zur Schleifstelle angeordnet, oder besonders vorteilhaft, oberhalb davon. Auf diese Weise können sie mit geringem Aufwand vor Verunreinigungen durch die Kühlschmierstoffe geschützt werden. Da der Schleifspindelstock als pendelnd gelagerte Schwinge ausgeführt ist, entfällt der beim Stand der Technik für die Hin- und Herbewegung beim Schleifen erforderliche Schlitten. Daraus resultierend sind die zu bewegenden bzw. zu beschleunigenden Massen deutlich reduziert.

Im Folgenden wird die Erfindung an Hand eines Ausführungsbeispieles näher erläutert:

Es zeigen:
- Fig. 1: eine perspektivische Darstellung der Schleifmaschine mit zwei Schleifspindelstöcken
- Fig. 2: die Schleifmaschine nach Fig. 1 im Querschnitt

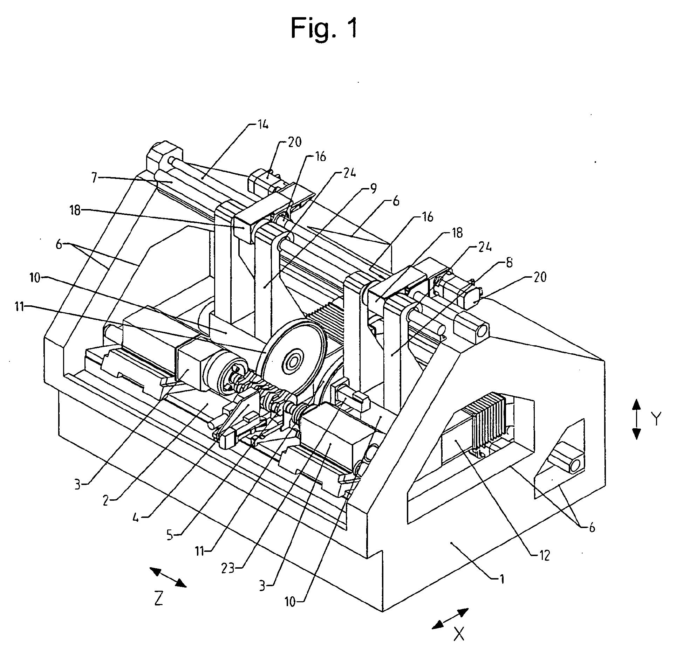

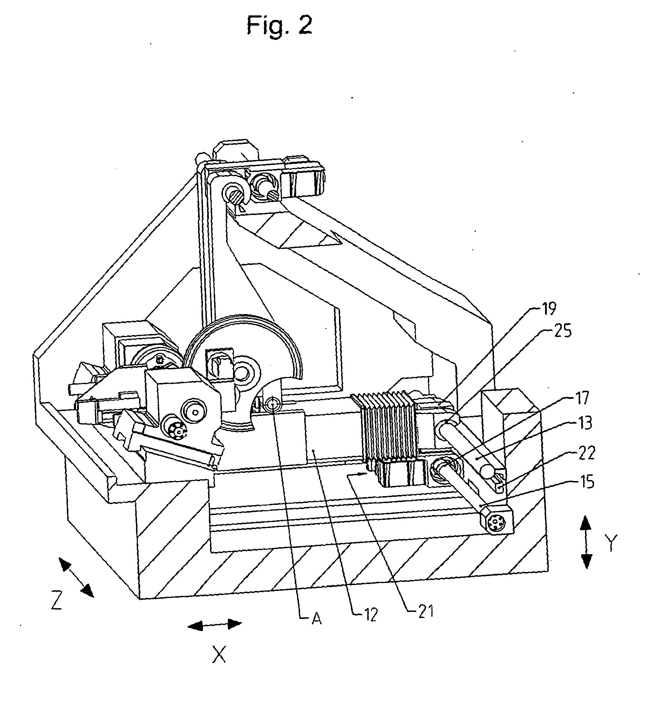

In Fig. 1 ist am Maschinenbett 1 der Maschinentisch 2 angeordnet, dessen Tischfläche horizontal verläuft oder auch geneigt sein kann. Der Maschinentisch 2 trägt zwei Werkstückaufnahmen 3 und Setzstöcke 4 zur Aufnahme von Werkstücken 5. Das Maschinenbett 2 verfügt über mehrere Durchbrüche 6 zur besseren Zugänglichkeit. Im oberen Bereich des Maschinenbettes 1 ist eine gestützte Führung 7 angebracht. Die Schwingen 8, 9 werden auf der Führung 7 über die Gelenke 24 geführt, die als offene Kugelbüchsen ausgeführt sind. Die Schwingen 8, 9 können daher sowohl pendelnde Bewegungen in X-Richtung als auch lineare Bewegungen in Z-Richtung ausführen. Am unteren Ende der Schwingen 8, 9 ist die Schleifspindel 10 mit der Schleifscheibe 11 angeordnet. Die Schleifspindeln sind als Motorspindeln mit Einbaumotor ausgeführt. Fig. 2 zeigt die Schleifmaschine in geschnittener Darstellung. Der Antrieb der Schwinge 8, 9 mit der Schleifspindel 10 in Richtung der X-Achse erfolgt durch die Zustelleinheit 12, die spielfrei über das Gelenk A mit der Schwinge 8, 9 verbunden ist. Die Zustelleinheit 12 weist eine integrierte Führung auf. Als Antriebselemente können Linearmotore, Kugelrollspindeln oder hydrodynamische Gewindespindeln eingesetzt werden. Die Ableitung der Bewegungskräfte in das Maschinenbett 1 erfolgt über ein weiteres Gelenk 25 auf die Führung 13. Dieses Gelenk, ebenfalls als offene Kugelbüchse ausgeführt, lässt, in Analogie zur Führung 7, pendelnde Bewegungen in Y-Richtung und lineare Bewegungen in Z-Richtung zu.

Der Antrieb für die Bewegung der Schwingen 8, 9 in Richtung der Z-Achse erfolgt durch zwei synchronisierte Kugelrollspindeln 14, 15. Die erste Kugelrollspindel 14 ist neben der Führung 7 und die zweite Kugelrollspindel 15 unterhalb der Führung 13 montiert. Bei der Ausführung mit zwei Spindelstöcken können, je nach eingesetztem Antriebsprinzip, durchgehende oder getrennte Kugelrollspindeln 14, 15 eingesetzt werden. Die Muttern 16, 17 der Kugelrollspindeln 14, 15 sind mit den Mitnehmern 18, 19 verbunden. Die Mitnehmer sind um die Z-Achse drehbar am Spindelstock bzw. an der Zustelleinheit 12 gelagert. Die dabei eingesetzten Lagerelemente sind in Richtung der Z-Achse vorgespannt, so dass eine spielfreie und steife Mitnahme der Spindelstöcke bzw. Zustelleinheiten gewährleistet ist. Zum Positionieren der Spindelstöcke in Richtung der Z-Achse sind Linearmaßstäbe 22 vorgesehen, deren Leseköpfe an den Muttern 16, 17 der Kugelrollspindeln 14, 15 befestigt sind. Alternativ können in den Servomotoren 20, 21 Drehgeber integriert sein. Die Abrichteinheit 23 für die Schleifscheiben 11 ist an der Werkstückaufnahme 3 befestigt.

### Bezugszeichenliste

- 1: Maschinenbett
- 2: Maschinentisch
- 3: Werkstückaufnahme
- 4: Setzstock
- 5: Werkstück
- 6: Durchbruch
- 7: Führung
- 8: Schwinge
- 9: Schwinge
- 10: Schleifspindel
- 11: Schleifscheibe
- 12: Zustelleinheit
- 13: Führung
- 14: Kugelrollspindel
- 15: Kugelrollspindel
- 16: Mutter
- 17: Mutter
- 18: Mitnehmer
- 19: Mitnehmer
- 20: Servomotor
- 21: Servomotor
- 22: Linearmaßstab
- 23: Abrichteinheit
- 24: Gelenk
- 25: Gelenk
- A: Gelenk

## Patentansprüche

1. Schleifmaschine zur Bearbeitung wellenförmiger Werkstücke mit mindestens einer Werkstückaufnahme (3), in der das Werkstück (5) einspannbar und antreibbar ist, mit mindestens einer auf das Werkstück (5) zustellbaren Schleifspindel (10),
wobei die Schleifspindel (10) am distalen Ende einer Schwinge (8, 9) in einem ersten Gelenk (24) drehbar am Maschinenbett (1) gelagert ist,
**dadurch gekennzeichnet,**
**dass** die Werkstückaufnahmen (3) ortsfest am Maschinenbett (1) befestigt sind und die Schleifspindel (10) mit der Schwinge (8, 9) auf einer Führung (7) am Maschinenbett (1) drehbar gelagert und auf der Führung (7) in Richtung der Z-Achse beweglich geführt ist.

2. Schleifmaschine nach Anspruch 1, **dadurch gekennzeichnet, dass** zum Schwenken der Schwinge (8, 9) um das Gelenk (24) eine Zustelleinheit (12) vorgesehen ist.

3. Schleifmaschine nach Anspruch 2, **dadurch gekennzeichnet, dass** die Zustelleinheit (12) am Maschinenbett (1) drehbar gelagert und über ein zweites Gelenk (A) mit der Schwinge (8, 9) gelenkig verbunden ist.

4. Schleifmaschine nach Anspruch 3, **dadurch gekennzeichnet, dass** ein weiteres Gelenk (25) auf einer weiteren Führung (13) lineare Bewegungen der Zustelleinheit (12) in Z-Richtung zulässt.

5. Schleifmaschine nach Anspruch 1, **dadurch gekennzeichnet, dass** das erste Gelenk (24) als offene Kugelbuchse ausgeführt und die Führung (7) zwischen ihren Enden vom Maschinenbett (1) gestützt wird.

## Claims

1. Grinding machine for machining shafts, having at least one work holder (3) in which the workpiece (5) can be clamped and driven, having at least one grinding spindle (10) which can be fed into the workpiece (5), the grinding spindle (10) being rotatably mounted on the machine bed (1) at the distal end of a rocker (8, 9) in a first joint (24), **characterized in that** the work holders (3) are fastened to the machine bed (1) in a fixed position, and the grinding spindle (10) is rotatably mounted with the rocker (8, 9) on a guide (7) on the machine bed (1) and is guided on the guide (7) in such a way as to be movable in the direction of the Z axis.

2. Grinding machine according to Claim 1, **characterized in that** an infeed unit (12) is provided for pivoting the rocker (8, 9) about the joint (24).

3. Grinding machine according to Claim 2, **characterized in that** the infeed unit (12) is rotatably mounted on the machine bed (1) and is connected to the rocker (8, 9) in an articulated manner via a second joint (A).

4. Grinding machine according to Claim 3, **characterized in that** a further joint (25) on a further guide (13) permits linear movements of the infeed unit (12) in the Z direction.

5. Grinding machine according to Claim 1, **characterized in that** the first joint (24) is designed as an open ball sleeve, and the guide (7) is supported between its ends by the machine bed (1).

## Revendications

1. Rectifieuse pour l'usinage de pièces en forme d'arbre, comprenant au moins un logement de pièce (3) dans lequel la pièce (5) peut être serrée et entraînée, comprenant au moins une broche porte-meule (10) pouvant être avancée vers la pièce (5), la broche porte-meule (10) étant montée de manière rotative sur le lit de la machine (1) à l'extrémité distale d'une coulisse (8, 9) dans une première articulation (24),
**caractérisée en ce que**
les logements de pièce (3) sont fixés en position sur le lit de la machine (1) et la broche porte-meule (10) est montée à rotation avec la coulisse (8, 9) sur un guide (7) sur le lit de la machine (1) et est guidée sur le guide (7) de manière mobile dans la direction de l'axe Z.

2. Rectifieuse selon la revendication 1, **caractérisée en ce que** l'on prévoit une unité d'avance (12) pour faire pivoter la coulisse (8, 9) autour de l'articulation (24).

3. Rectifieuse selon la revendication 2, **caractérisée en ce que** l'unité d'avance (12) est montée à rotation sur le lit de la machine (1) et est connectée à la coulisse (8, 9) de manière articulée par le biais d'une deuxième articulation (A).

4. Rectifieuse selon la revendication 3, **caractérisée en ce qu'**une articulation supplémentaire (25) sur un guide supplémentaire (13) permet des mouvements linéaires de l'unité d'avance (12) dans la direction Z.

5. Rectifieuse selon la revendication 1, **caractérisée en ce que** la première articulation (24) est réalisée sous forme de douille sphérique et le guide (7) est supporté entre ses extrémités par le lit de la machine (1).
